# EUROPEAN PATENT APPLICATION

(11) **EP 1 762 742 A2**
(43) Date of publication of application: **14.03.2007**
(21) Application number: 06018753.1
(22) Date of filing: 07.09.2006
(51) Int. Cl.: F16D 55/227

(54) **Tapered brake caliper slide pin**

(30) Priority: 08.09.2005 US 222342
(71) Applicant: Akebono Corporation North America, Farmington Hills, MI 48331 (US)
(72) Inventor: Barbosa, Manuel, Novi Michigan 48375 (US); Barrett, Sean C., Farmington Hills Michigan 48331 (US); Jedele, Philip N., Ypsilanti Michigan 48198 (US)
(74) Representative: Müller, Thomas Michael

(57) **Abstract**

The present invention relates to a disc brake (10) operable to apply a clamping force to a rotatable disc (16). The disc brake includes a support bracket, slide pins (20,22) coupled to the support bracket (18), inner and outer brake shoes (12,14) and a caliper (24) supported by the slide pins. The support bracket is a substantially rectangular frame defining a window. The window is adapted to accept a portion of a disc protruding therethrough. The support bracket includes a pair of spaced apart apertures (66,68) extending through the frame where each aperture includes a threaded portion (70) and a conical seat extending along an axis aligned to intersect the disc (84). The slide pins are threadingly engaged with a threaded portion (87). The slide pins do not extend through the window but protrude outwardly away from the window. Each slide pin has a tapered portion (82) in engagement with one of the conical seats.

## Description

### BACKGROUND AND SUMMARY OF THE INVENTION

The present invention relates to a disc brake and, more particularly, to a disc brake caliper slide pin having a tapered design.

Automotive components are typically exposed to a wide variety of environmental inputs including variations in temperature and load throughout operation of a vehicle. Use of a vehicle over rough surfaces provides a road load vibrational input as well. To assure proper operation of a vehicle component, it is desirable to maintain the structural integrity of the component or assembly for an extended time period.

Brake assemblies typically include a number of components interconnected to one another via threaded fasteners. To assure proper braking operation, it is desirable that the thread fasteners maintain a desired clamp load during and after exposure to the environmental and operational inputs previously discussed. Some bolted joints have experienced reduced clamp load or "backing-off" for a number of reasons. One reason relates to joint relaxation where a relatively short bolt or shaft is initially loaded to exhibit a relatively small elongation. If the bolt relaxes, the relatively small elongation is no longer present and the joint clamp load decreases. In addition, the clamping force generated by a threaded fastener may be insufficient if the surface area between any two components within the joint is insufficient to maintain the clamp load without yielding. In this case, relatively high contact stresses are generated between clamped components causing a portion of one of the clamped components to yield or flow when clamped. The yielding of the material reduces the fastener elongation and the clamp load is greatly decreased.

The present invention provides a disc brake, having a tapered slide pin designed to maintain a desired location during operation of the brake and the vehicle.

In particular, the present invention relates to a disc brake operable to apply a clamping force to a rotatable disc. The disc brake includes a support bracket, slide pins coupled to the support bracket, inner and outer brake shoes and a caliper supported by the slide pins. The support bracket is a substantially rectangular frame defining a window. The window is adapted to accept a portion of a disc protruding therethrough. The support bracket includes a pair of spaced apart apertures extending through the frame where each aperture includes a threaded portion and a conical seat extending along an axis aligned to intersect the disc. The slide pins are threadingly engaged with a threaded portion. The slide pins do not extend through the window but protrude outwardly away from the window. Each slide pin has a tapered portion in engagement with one of the conical seats.

Additionally, the present invention relates to a disc brake having a disc rotatable about a laterally extending axis, a support bracket, slide pins coupled to the support bracket and a caliper slidably supported by the slide pins. The support bracket has first and second spaced apart, substantially parallel legs as well as third and fourth spaced apart, substantially parallel legs. The first and second legs are interconnected at their ends by the third and fourth legs to define a window. The first leg has spaced apart pin apertures where each pin aperture includes a threaded portion and a tapered portion extending along an axis. Each pin aperture is substantially parallel to the disc axis of rotation and radially positioned within the outer diameter of the disc. The slide pins have a threaded end and a tapered portion adjacent the threaded end. Each threaded end engages the threaded portion of one of the pin apertures. The tapered portion of each slide pin is driven into engagement with the tapered portion of each pin aperture by rotation of the slide pin relative to the support bracket. The caliper is slidably supported by the slide pins and includes a piston cavity for moveably supporting the piston. The piston cavity has an axis extending substantially parallel to and radially inward of the slide pin axes.

### BRIEF DESCRIPTION OF THE DRAWINGS

The present invention will become more fully understood from the detailed description and the accompanying drawings, wherein:
Figure 1 is an exploded perspective view of an exemplary disc brake constructed in accordance with the teachings of the present invention;
Figure 2 is a perspective view of the assembled disc brake without the disc;
Figure 3 is a perspective view of the assembled disc brake from another view;
Figure 4 is a cross-sectional view taken along line 4-4 as shown in Figure 2;
Figure 5 is a cross-sectional view taken along line 5-5 as shown in Figure 2; and
Figure 6 is a schematic depicting the radial locations of the piston bores, the slide pin apertures and the brake support apertures.

### DETAILED DESCRIPTION OF THE PREFERRED EMBODIMENTS

The following description of the preferred embodiment(s) is merely exemplary in nature and is in no way intended to limit the invention, its application, or uses.

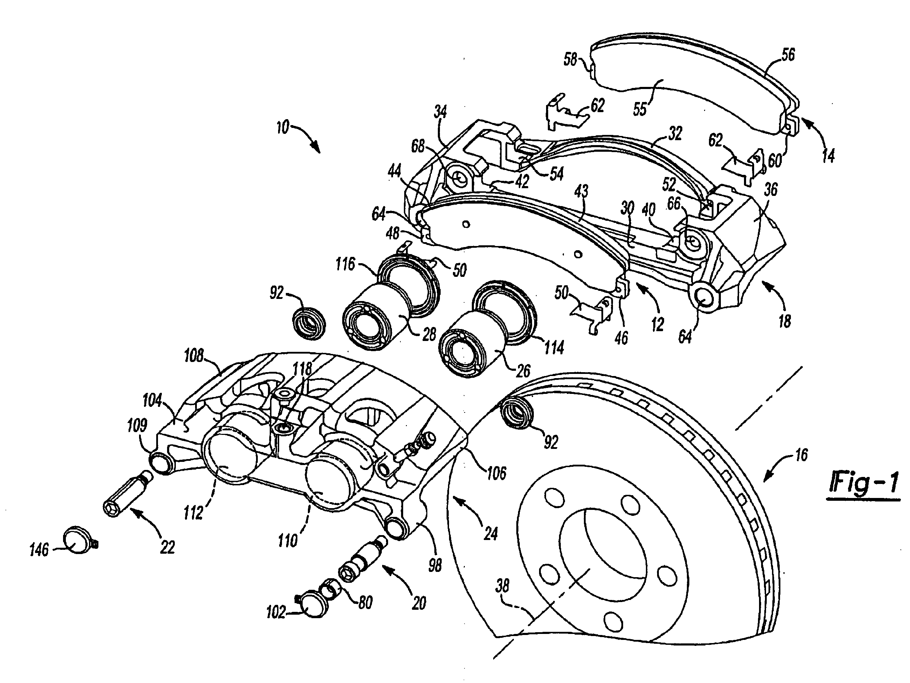

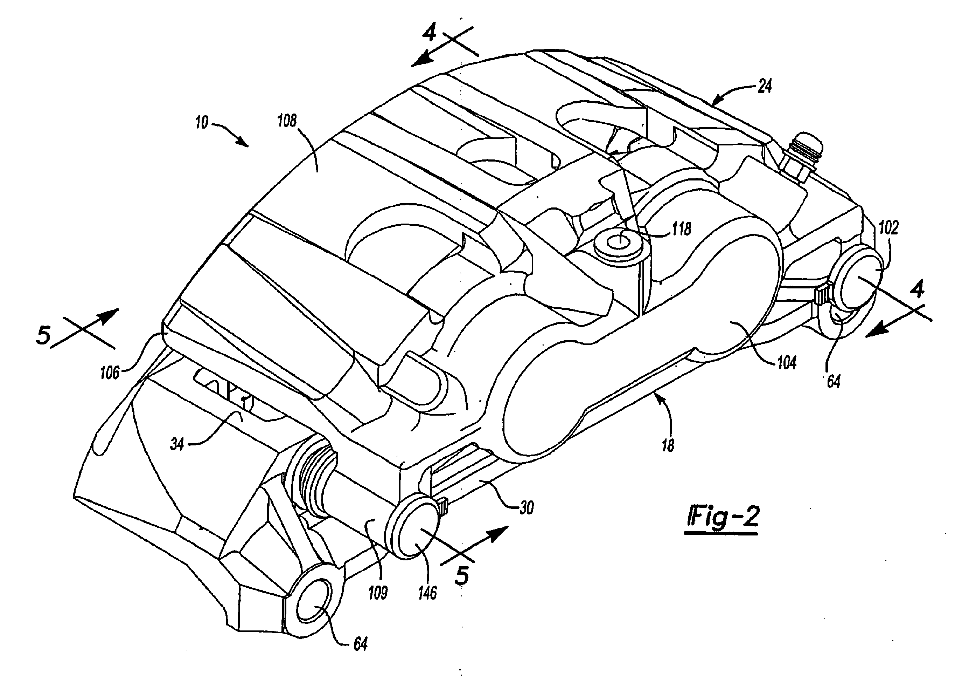

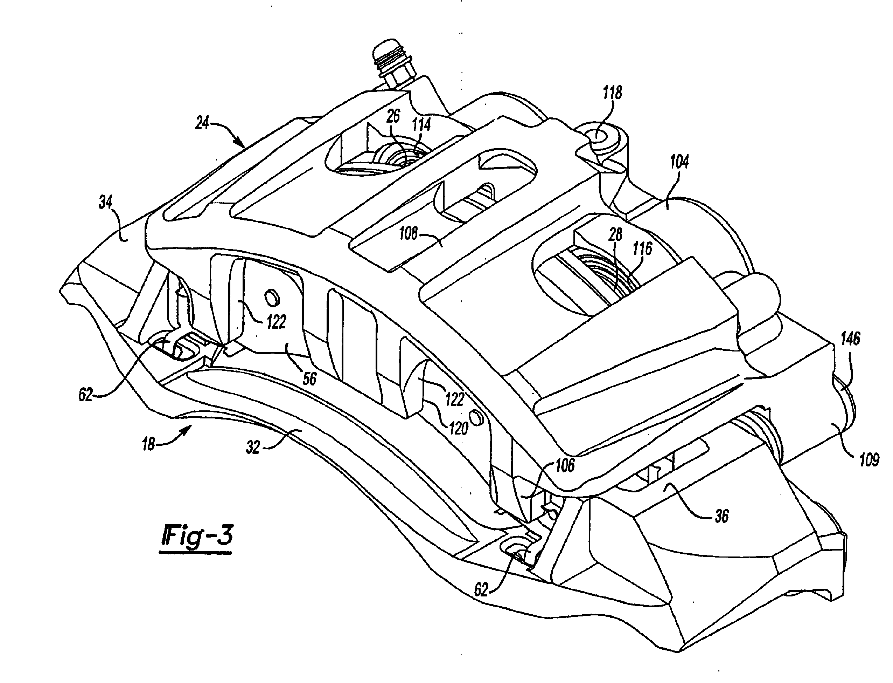

With reference to Figures 1-6, a disc brake constructed in accordance with the teachings of the present invention is identified at reference numeral 10. Disc brake 10 is operable to selectively clamp an inboard brake shoe 12 and an outboard brake shoe 14 against a rotatable disc 16 to decelerate a vehicle (not shown). Disc brake 10 includes a support bracket 18 adapted to mount to a steering knuckle or axle component of the vehicle to support disc brake during operation. A first slide pin 20 and a second slide pin 22 are mounted to support bracket 18 in a manner to resist vibratory loosening as will be described in greater detail hereinafter. First slide pin 20 and second slide pin 22 laterally inwardly protrude from support bracket 18. A caliper 24 is slidably supported on first slide pin 20 and second slide pin 22. A first piston 26 and a second piston 28 are slidably supported within caliper 24. First piston 26 and second piston 28 are moveable via hydraulic pressure being selectively supplied to caliper 24. Inboard brake shoe 12 and outboard brake shoe 14 are positioned on opposite wear surfaces of disc 16. Caliper 24 at least partially envelops inboard brake shoe 12 and outboard brake shoe 14 such that axial movement of first piston 26 and second piston 28 cause the brake shoes to clamp on disc 16.

More particularly, brake support bracket 18 is a one-piece frame-shaped member preferably constructed by a casting or forging process. Support bracket 18 includes a first leg 30, a second leg 32, a third leg 34 and a fourth leg 36. First leg 30 is a substantially linear elongated member positioned substantially parallel to second leg 32. Second leg 32 is arched in a radial direction in relation to a laterally extending axis 38 about which disc 16 rotates. One end of first leg 30 is interconnected to one end of second leg 32 via third leg 34. The opposite ends of legs 30 and 32 are interconnected by fourth leg 36. First leg 30 includes a first detent 40 and a second detent 42.

Inboard brake shoe 12 includes a lining block 43 mounted on a backing plate 44. Backing plate 44 includes integrally formed tabs 46 and 48 protruding from each end. Detents 40 and 42 restrict inboard brake shoe 12 from radial movement but allow lateral movement of the brake shoe. Clips 50 may be inserted within detents 40 and 42 to assist in maintaining the proper position of inboard brake shoe 12 during operation. Second leg 32 includes a similar pair of detents 52 and 54. Outboard brake shoe 14 includes a lining block 55 mounted to a backing plate 56. Backing plate 56 includes integrally formed tabs 58 and 60 protruding from each end. Clips 62 cooperate with detents 52 and 54 to restrain tabs 58 and 60 from linear movement while allowing lateral movement parallel to axis 38.

First leg 30 includes a pair of brake mounting apertures 64 operable to receive brake fasteners to couple support bracket 18 to a knuckle or other vehicle suspension component. Caliper 24, inboard brake shoe 12 and outboard brake shoe 14 are supported via this structural interconnection. Support bracket 18 also includes a first slide pin aperture 66 and a second slide pin aperture 68. Slide pin aperture 66 extends laterally through first leg 30 along a first slide pin axis 69. Slide pin aperture 66 includes an internally threaded portion 70 and a tapered portion 72. Slide pin 20 is threadingly engaged with pin aperture 66 and protrudes laterally inboard along axis 69.

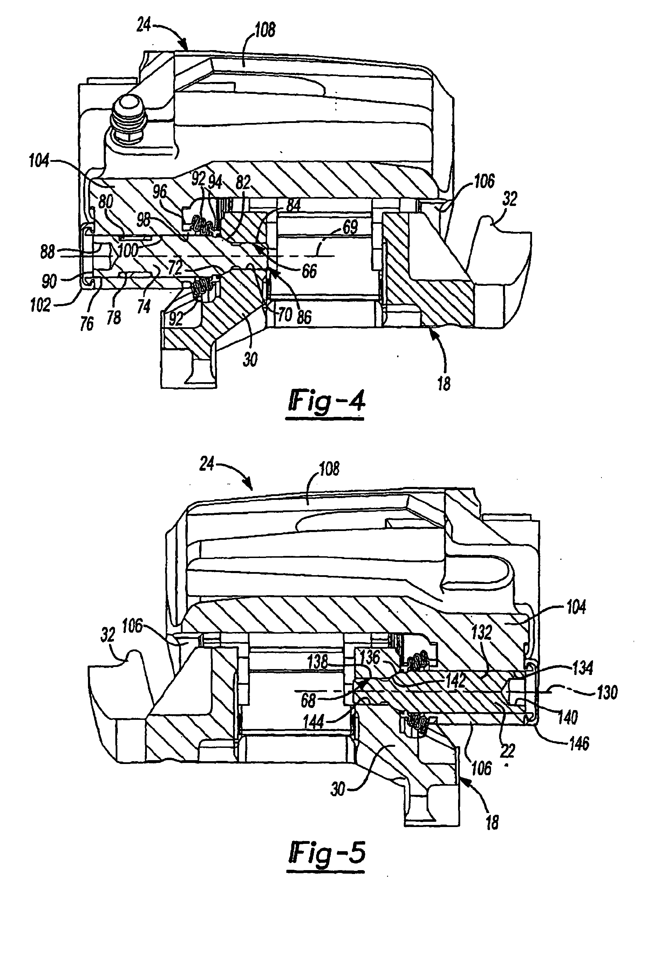

As best shown in Figure 4, slide pin 20 is a substantially cylindrical member having a body portion 74 with a substantially smooth outer cylindrical surface 76. A groove 78 is formed in body portion 74 and is in receipt of a bushing 80. Bushing 80 functions to isolate the slide pin 20 from the caliper body to reduce caliper rattle on the slide pins. First slide pin 20 also includes a tapered portion 82 and a threaded portion 84. Threaded portion 84 is positioned at a first end 86. A drive recess 88 is positioned at a second opposite end 90. First slide pin 20 is coupled to support bracket 18 by inserting a drive tool within drive recess 88 and rotating first slide pin 20 relative to support bracket 18. First slide pin 20 is rotated until tapered portion 82 drivingly engages tapered surface 72 to form a press-type fit. An axially collapsible bellows 92 has a first end 94 coupled to first slide pin 20. A second end 96 of bellows 92 is secured to a boss 98 formed on caliper 24.

Caliper 24 includes a pin bore 100 in receipt of first slide pin 20. A running-class fit exists between outer cylindrical surface 76 of first slide pin 20 and pin bore 100 to allow caliper 24 to translate laterally relatively to support bracket 18 during operation.

Bellows 92 is operable to axially extend and compress to account for the relative movement between caliper 24 and support bracket 18. A cap 102 engages boss 98 and covers pin bore 100. Cap 102 is removable to allow access to drive recess 88 should brake service and removal of first slide pin 20 be required.

Caliper 24 is a generally "C" shaped member having an inboard side portion 104 and an outboard side portion 106 interconnected by a laterally extending bridge portion 108. First side portion 104 includes boss portion 98 as well as another boss portion 109 substantially similar to boss 98. Furthermore, first side portion 104 includes a first piston bore 110 and a second piston bore 112. First piston 26 is slidably positioned within first piston bore 110 to move along a first piston bore axis 113. A first piston seal 114 sealingly engages first piston 26 and first side portion 104 to protect the piston bore from ingress of contamination. Similarly, second piston 28 is slidably positioned within second piston bore 112 to move along a second piston bore axis 115. A second piston seal 116 sealingly engages second piston 28 and first portion 104. First piston 26 and second piston 28 are operable under hydraulic fluid pressure entering a port 118 to apply a force to backing plate 44 of inboard brake shoe 12.

Outboard side portion 106 includes a surface 120 in engagement with backing plate 56 of outboard brake shoe 14. A pair of cut-outs 122 extend through outboard side portion 106 to allow tooling (not shown) sufficient access to form first piston bore 110 and second piston bore 112. Outboard side portion 106 is laterally positioned between first leg 30 and second leg 32 of support bracket 18. Because inboard brake shoe 12, outboard brake shoe 14 and caliper 24 are laterally moveable relative to support bracket 18 and disc 16, both inboard brake shoe 12 and outboard brake shoe 14 may clamp against disc 16.

Figure 4 depicts the interconnection of support bracket 18 and caliper 24 via second slide pin 22. Second slide pin 22 is substantially similar to first slide pin 20 except that a bushing is not positioned between second slide pin 22 and caliper 24. Second slide pin 22 extends along an axis 130. Axis 130 is substantially parallel to axis 69 and axis 38. Second slide pin 22 includes a body portion 132 slidably positioned within a bore 134 extending through boss 109. Second slide pin 22 includes a tapered portion 136 and a threaded portion 138. A drive recess 140 is formed in an end of second slide pin 22 opposite the end having threaded portion 138. Slide pin bore 68 of support bracket 18 includes a tapered portion 142 and an internally threaded portion 144. As previously described in detail with relation to first slide pin 20, second slide pin 22 is installed by inserting a drive tool within drive recess 140 to threadingly engage threaded portion 138 with internal thread 144. The second slide pin 22 continues to be rotated until tapered portion 136 of second slide pin 22 drivingly engages tapered portion 132 of pin aperture 68. The portion of second slide pin 22 between the tapered interface and the threaded portion 138 is placed in tensile loading. Because tapered portion 136 is formed at an angle of 30 degrees relative to axis 130, tapered portion 136 is wedged into engagement with tapered portion 142 of support bracket 18. A mechanical interconnection is formed such that a force to remove second slide pin 22 from supply bracket 18 is greater than the force used to drive tapered portion 136 into engagement with tapered portion 142 of slide pin bore 68. In this manner, second slide pin 22 resists vibratory loosening and/or a degradation in pin elongation during operation of disc brake 10. An end cap 146 engages boss 109 to seal bore 134 from contamination. Cap 146 may be selectively removed to allow access to drive recess 140.

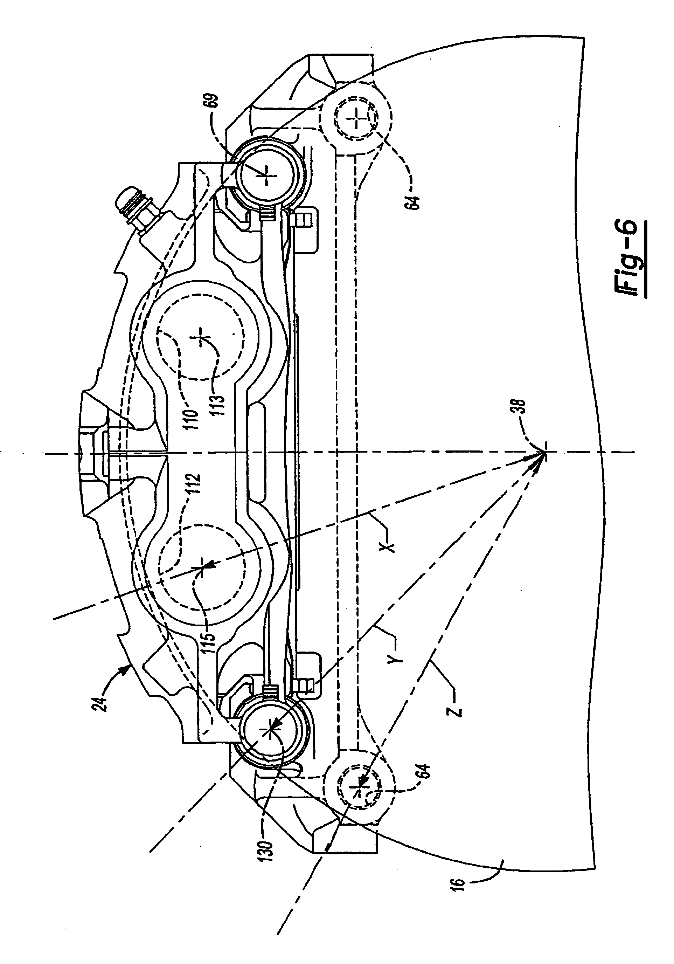

With reference to Figure 6, it should be appreciated that first piston bore axis 113 and second piston bore axis 115 are positioned at a first radial distance X from laterally extending axis 38. First slide pin bore axis 69 and second slide pin bore axis 130 are positioned at a radial distance Y from disc axis of rotation 38. Distance Y is greater than distance X such that piston bores 110 and 112 are radially inward of slide pin bores 66 and 68. The centerline of brake mounting apertures 64 are radially positioned from axis 38 a distance Z. In the embodiment shown in Figure 6, distance Y is approximately the same as distance Z. Lengths X, Y and Z need not maintain this relationship in other brake embodiments. It should also be noted that each of the piston bore axes, the slide pin bore axes and the centerlines of brake mounting apertures 64 are radially positioned within the circumference of disc 16. This positioning provides a reduced brake envelope to assist in packaging the brake in a vehicle. Also, the arrangement provides a well balanced caliper for long term use.

Furthermore, the foregoing discussion discloses and describes merely exemplary embodiments of the present invention. One skilled in the art will readily recognize from such discussion, and from the accompanying drawings and claims, that various changes, modifications and variations may be made therein without department from the spirit and scope of the invention as defined in the following claims.

## Claims

1. Disc brake operable to apply a clamping force to a rotatable disc, the disc brake comprising:
a support bracket having a substantially rectangular frame defining a window, the window being adapted to accept a portion of the disc protruding therethrough, the support bracket including a pair of spaced apart apertures extending through the frame, each aperture including a threaded portion and a conical seat extending along an axis aligned to intersect the disc;
slide pins threadingly engaged with the threaded portion, the slide pins not extending through the window but protruding outwardly away from the window, each slide pin having a tapered portion in engagement with one of the conical seats;
inner and outer brake shoes; and
a caliper slidably supported by the slide pins, the caliper housing a slidable piston operable to cause the inner and outer brake shoes to move toward one another.

2. Disc brake according to claim 1 wherein each brake shoe is slidably supported by the support bracket.

3. Disc brake according to claim 2 wherein the support bracket includes four slots, each brake shoe having a tab at each end slidably positioned within one of the slots.

4. Disc brake according to one of the preceding claims wherein the apertures extending through the frame extend through only one of four legs of the frame and wherein the support bracket includes a pair of spaced apart brake mounting apertures positioned on the same leg.

5. Disc brake according to claim 4 wherein the apertures having conical seats are circumferentially positioned between the brake mounting apertures.

6. Disc brake according to one of the preceding claims wherein each slide pin includes an end having an external thread and an opposite end having a substantially smooth cylindrical surface, the tapered portion being axially positioned between the two ends of the slide pin.

7. Disc brake according to claim 6 wherein the outer diameter of the substantially smooth cylindrical surface is greater than the outer diameter of the external thread.

8. Disc brake according to one of the preceding claims wherein each slide pin includes a recessed head adapted to receive a drive tool to couple the slide pin to the support bracket.

9. Disc brake according to one of the preceding claims further including a second piston slidably positioned within the caliper, the second piston being operable to transmit a force to one of the inner and outer brake shoes.

10. Disc brake according to one of the preceding claims wherein the tapered portion forms an angle of about 30 degrees with a longitudinal axis of the slide pin.

11. Disc brake comprising:
a disc having an outer diameter and being rotatable about a laterally extending axis;
a support bracket having first and second spaced apart, substantially parallel legs as well as third and fourth spaced apart, substantially parallel legs, the first and second legs being interconnected at their ends by the third and fourth legs to define a window, the first leg having spaced apart pin apertures, each pin aperture having a threaded portion and a tapered portion extending along an axis, each pin aperture axis being substantially parallel to the disc axis of rotation and radially positioned within the outer diameter of the disc;
slide pins having a threaded end and a tapered portion adjacent the threaded end, each threaded end engaging the threaded portion of one of the pin apertures, the tapered portion of each slide pin being driven into engagement with the tapered portion of each pin aperture by rotation of each slide pin relative to the support bracket; and
a caliper slidably supported by the slide pins, the caliper including a piston cavity for moveably supporting a piston, the piston cavity having an axis extending substantially parallel to and radially inward of the slide pin axes.

12. Disc brake according to claim 11 wherein the caliper includes another piston cavity moveably supporting another piston, the another piston cavity having an axis extending substantially parallel to and radially inward of the slide pin axes.

13. Disc brake according to claim 12 wherein the slide pins laterally outwardly extend from the first leg and the caliper includes a generally "C" shaped cross-section having two parallel side portions interconnected by a bridge portion, one of the side portions including bores in receipt of the slide pins.

14. Disc brake according to claim 13 wherein the other of the side portions is laterally positioned between the first and second legs of the support bracket.

15. Disc brake according to one of claims 13 or 14 further including a removable cap covering one of the bores in receipt of the slide pins, wherein removal of the cap exposes a recessed head of the slide pin.

16. Disc brake according to one of claims 11 to 15 wherein the tapered portion forms an angle of about 30 degrees with a longitudinal axis of the slide pin.

17. Disc brake comprising:
a rotatable disc;
a support bracket including a pair of spaced apart pin apertures and a pair of
spaced apart brake mounting apertures, each pin aperture including a threaded portion and a tapered seat extending along a pin axis aligned to intersect the disc;
slide pins having a tapered portion in engagement with one of the tapered seats and an end portion threadingly engaged with the threaded portion;
inner and outer brake shoes; and
a caliper slidably supported by the slide pins, the caliper slidably supporting two pistons operable to cause the inner and outer brake shoes to move toward the rotatable disc, the pistons being moveable along piston axes, wherein each of the pin axes, the piston axes and axes of the brake mounting apertures are radially positioned within a circumference defined by the disc.

18. Disc brake according to claim 17 wherein each pin tapered portion defines an angle of about 30 degrees with a longitudinal axis of the pin.

19. Disc brake according to claim 18 wherein each slide pin axis is positioned radially further from an axis of rotation of the disc than the piston axes.

20. Disc brake according to claim 19 wherein each brake shoe is slidably supported by the support bracket.

21. Disc brake according to claim 20 wherein each slide pin includes a recessed head adapted to receive a drive tool to couple the slide pin to the support bracket.
